# EUROPÄISCHE PATENTSCHRIFT

(11) **EP 2 242 676 B1**
(45) Veröffentlichungstag und Bekanntmachung des Hinweises auf die Patenterteilung: **22.01.2014**
(21) Anmeldenummer: 09712134.7
(22) Anmeldetag: 12.02.2009
(51) Int. Cl.: B62D 5/04, B60G 21/055

(54) **ANORDNUNG EINES WANKSTABILISIERUNGSSYSTEMS SOWIE EINES LENKSYSTEMS AN EINEM KRAFTFAHRZEUG**
ARRANGEMENT OF A ROLLING STABILIZATION SYSTEM AND OF A STEERING SYSTEM ON A MOTOR VEHICLE
DISPOSITION D' UN SYSTÈME DE STABILISATION DU ROULIS AINSI QUE D' UN SYSTÈME DE DIRECTION SUR UN VÉHICULE

(30) Priorität: 19.02.2008 DE 102008009874
(43) Veröffentlichungstag der Anmeldung: 27.10.2010
(73) Patentinhaber: Bayerische Motoren Werke Aktiengesellschaft, 80809 München (DE)
(72) Erfinder: SCHMIDT, Wolfgang, 86899 Landberg am Lech (DE); ERTLMAIER, Stephan, 85737 Ismaning (DE)
(74) Vertreter: Schmidt, Günter H. H.
(86) Internationale Anmeldenummer: PCT/EP2009/000966
(87) Internationale Veröffentlichungsnummer: WO 2009/103452

(56) Entgegenhaltungen:
- EP-A- 2 050 597
- DE-A1- 10 142 388
- DE-A1- 10 233 499
- DE-A1-102006 001 821
- JP-A- 4 027 615

## Beschreibung

Die Erfindung betrifft die Anordnung eines Wankstabilisierungssystems mit geteiltem Querstabilisator sowie eines Lenksystems an einem zweispurigen Kraftfahrzeug, wobei ein Getriebe des Wankstabilisierungssystems im wesentlichen koaxial zwischen den beiden gegeneinander verdrehbaren Hälften des Querstabilisators und ein Motor zum Einleiten eines Stabilisierungsmomentes seitlich dieses Getriebes und Querstabilisators angeordnet ist, und wobei das Lenksystem neben einem Lenkgetriebe, mit welchem letztlich auf die lenkbaren Fahrzeug-Räder einwirkende Spurhebel im wesentlichen in Fahrzeug-Querrichtung verlagerbar sind, einen seitlich des Lenkgetriebes und einer durch die verlagerbaren Spurhebel beschriebenen Verlagerungsachse angeordneten Motor zur Einleitung eines eine solche Verlagerung unterstützenden oder veranlassenden Moments aufweist. Zum technischen Umfeld wird beispielshalber auf die DE 102 33 499 A1 sowie auf die DE 101 42 388 A1 und die DE 10 2006 001 821 A1 verwiesen.

Neben der derzeit bei der Anmelderin in Serienproduktion gewählten Anordnung eines Stell-Motors eines Wankstabilisierungssystems koaxial zum geteilten Querstabilisator ist die Anordnung dieses Stell-Motors abseits des Querstablisators bereits grundsätzlich bekannt. In vergleichbarer Weise kann auch ein Lenkunterstützungs-Motor bspw. an einem Zahnstangen-Lenkgetriebe sich in Fahrzeug-Querrichtung erstreckender Zahnstange, an deren Enden sich in bekannter Weise letztlich auf die lenkbaren Räder einwirkende Spurhebel oder Spurstangen anschließen, angeordnet sein. Dabei kann die Übertragung des Drehmoments vom jeweiligen Motor, dessen Rotationsachse vorzugsweise in Fahrzeug-Querrichtung verläuft, zum jeweiligen Getriebe, d.h. zum Getriebe "innerhalb" des geteilten Querstabilisators bzw. zum bspw. Zahnstangen-Lenkgetriebe über ein Zahnradgetriebe oder ein endloses Zugmittelgetriebe erfolgen.

Hiermit soll nun eine vorteilhafte Anordnung eines Wankstabilisierungssystems mit geteiltem Querstabilisator sowie eines Lenksystems nach dem Oberbegriff des Anspruchs 1 an einem Kraftfahrzeug aufgezeigt werden (= Aufgabe der vorliegenden Erfindung).
Die Lösung dieser Aufgabe ist dadurch gekennzeichnet, dass der Motor des Wankstabilisierungssystems und der Motor des Lenksystems in Fahrzeug-Querrichtung betrachtet im wesentlichen hintereinander liegen. Vorteilhafte Aus- und Weiterbildungen sind Inhalt der Unteransprüche.

Die vorgeschlagene Anordnung zeichnet sich durch größtmögliche Kompaktheit aus, d.h. die zur Verfügung stehenden Freiräume können auf diese Weise optimal genutzt werden. Besonders günstig ist, dass diese gesamte Anordnung bei den sog. Rechtslenker-Fahrzeugen, bei denen eine den Lenkwunsch des Fahrers von seinem Lenkrad zum Lenkgetriebe übertragende Lenkspindel in der rechten Hälfte des Fahrzeugs verläuft, einfach (bezüglich der Fahrzeug-Längsachse) spiegelsymmetrisch zu den sog. Linkslenker-Fahrzeugen angeordnet werden kann. Idealerweise kann für das Lenksystem sowie für das Wankstabilisierungssystem sogar ein baugleicher Motor verwendet werden, insbesondere wenn es sich hierbei um Elektromotoren handelt, deren Rotationsachsen vorzugsweise in Fahrzeug-Querrichtung verlaufen und im wesentlichen zusammen fallen.

Die Anordnung innerhalb eines vorzugsweise eine Vormontageeinheit bildenden Achsträgers zeigt Vorteile beim Zusammenbau des Fahrzeugs, wobei in vorteilhaften Weiterbildungen die besagten Motoren oder Motor-Getriebe-Einheiten, die durch einen Zusammenbau von besagtem Motor, dem Getriebe des jeweiligen Systems (Wankstabilisierungssystem, Lenksystem) und einem Zwischengetriebe zur Übertragung des Drehmoments vom Motor zum sog. System-Getriebe gebildet werden, der Versteifung des Achsträgers, bspw. auch im Hinblick auf einen Fahrzeug-Crash, dienen können, indem zumindest eine geeignete Abstützung (gemäß den Ansprüchen 4, 5) vorgesehen ist.

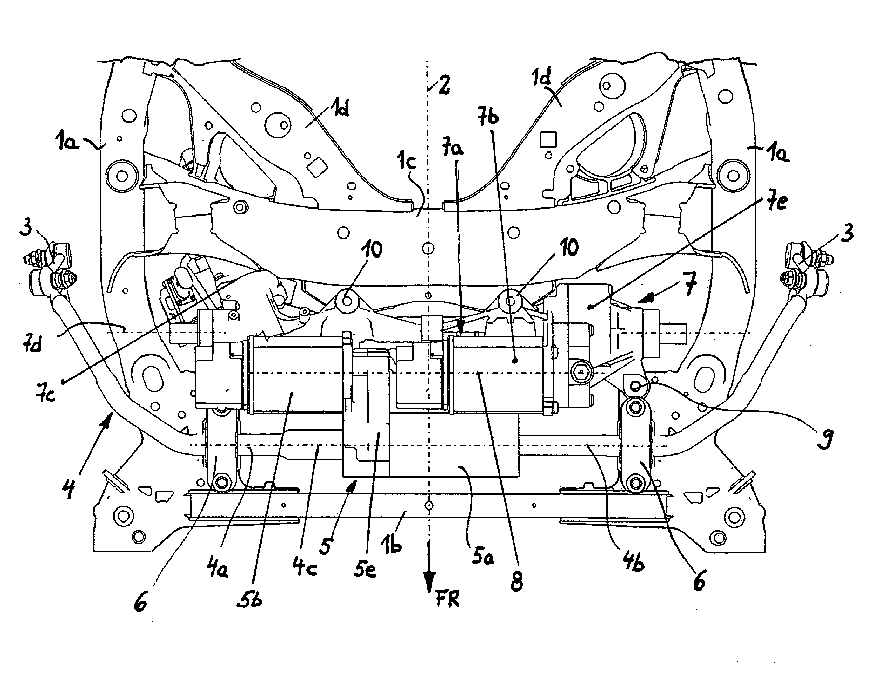

Im folgenden wird die Erfindung anhand eines bevorzugten Ausführungsbeispieles weiter erläutert, wobei die beigefügte einzige Figur die Aufsicht von unten (in Richtung der Fahrzeug-Hochachse) auf einen Vorder-Achsträger eines Personenkraftwagens mit erfindungsgemäßer Anordnung von Wankstabilisierungssystem und Lenksystem für die figürlich nicht dargestellten Vorderräder des Kraftfahrzeugs zeigt. Erfindungswesentlich können sämtliche näher beschriebenen Merkmale sein.

Mit der Bezugsziffer 1 ist in seiner Gesamtheit ein sog. Achsträger für die Vorderachse eines PKW's bezeichnet, der im wesentlichen aus zwei sich beidseitig des Fahrzeugs in Längsrichtung erstreckenden Längsträgern 1 a sowie einer vorderen Querstrebe 1b und einer hinteren Querstrebe 1c besteht, die zwischen den beiden Längsträgern 1a abgestützt sind. Die mittige Längsachse des Fahrzeugs ist mit der Bezugsziffer 2 bezeichnet und die Fahrtrichtung des Fahrzeugs ist durch den Pfeil FR dargestellt. Hinter der vorderen Querstrebe 1 b sind symmetrisch zur Längsachse 2 noch Aufnahmen 1d für Motorlager zwischen der Querstrebe 1 c und dem jeweiligen Längsträger 1a abgestützt, wobei letzteres in Figur abgeschnitten und daher nicht vollständig sichtbar ist.

In grundsätzlich bekannter Weise ist zwischen den figürlich nicht dargestellten, linksseitig sowie rechtsseitig außerhalb des Vorder-Achsträgers 1 angeordneten und über übliche, figürlich ebenfalls nicht dargestellte und teilweise am Vorder-Achsträger 1 abgestützte Radführungsglieder geführten Rädern ein Querstabilisator 4 vorgesehen, der linksseitig sowie rechtsseitig über eine Pendelstütze 3 an einem der genannten Radführungsglieder oder an einem grundsätzlich bekannten sog. Schwenklager des jeweiligen Rades abgestützt ist. Dieser Querstabilisator 4 ist mittig geteilt und besteht somit aus einer rechtsseitigen und einer linksseitigen Stabilisatorhälfte 4a bzw. 4b, die derart über ein Getriebe 5a miteinander verbunden sind, dass diese beiden in Lagerstellen 6 verdrehbar am Achsträger 1 gelagerten Stabilisatorhälften 4a, 4b mit ihren sich auf einer gemeinsamen Quer-Achse 4c erstreckenden Abschnitten gegeneinander um diese Querachse 4c um einen gewissen Winkelbetrag verdreht werden können. Hiermit kann in grundsätzlich bekannter Weise einem Wanken des auf den besagten Rädern abgestützten Fahrzeug-Aufbaus entgegengewirkt werden, wobei das entsprechende Drehmoment, das als Stabilisierungsmoment bezeichnet wird und mit dem die Stabilisatorhälften 4a, 4b gegeneinander verdreht werden, von einem Motor 5b in das genannte Getriebe 5a eingeleitet wird. Der soweit beschriebene geteilte Querstabilisator 4 bildet somit zusammen mit dem Getriebe 5a und dem Motor 5b, bei dem es sich hier um einen Elektromotor handelt, ein sog. Wankstabilisierungssystem 5. Dabei ist - wie ersichtlich - der Motor 5b des Wankstabilisierungssystems 5 seitlich der Quer-Achse 4c des Querstabilisators 4 sowie des Getriebes 5a angeordnet und es ist zur Übertragung des Drehmoments vom Motor 5b in das Getriebe 5a ein geeignetes Zwischengetriebe 5e, bspw. in Form eines Zahnradgetriebes oder eines endlosen Zugmittelgetriebes, vorgesehen. Der im vorangegangenen Satz verwendete Begriff "seitlich" bedeutet dabei nicht, dass der Motor 5b seitlich neben dem Getriebe 5a angeordnet ist, sondern soll zum Ausdruck bringen, dass die Rotationsachse des Motors 5b und die Eingangs- oder Ausgangs-Drehachse des Getriebes 5a nicht zusammenfallen.

Da es sich bei den bereits genannten Rädern um die Vorderräder des Fahrzeugs handelt, sind diese mittels eines Lenksystems 7 lenkbar, wobei an dieser Stelle ausdrücklich darauf hingewiesen sei, dass eine entsprechende (erfindungsgemäße) Anordnung eines Wankstabilisierungssystems 5 sowie eines im weiteren kurz beschriebenen Lenksystems 7 auch für die Hinterräder eines zweispurigen Fahrzeugs, d.h. an dessen Hinterachse vorgesehen sein kann, wenn dessen Hinterräder zumindest geringfügig lenkbar sind. Ferner sei darauf hingewiesen, dass im weiteren zwar ein Servo-Lenksystem mit in das Lenkgetriebe einleitbarem Unterstützungsmoment beschrieben wird, dass aber diese Erfindung auch auf ein steer-by-wire-System anwendbar ist, bei dem ausschließlich ein motorisches Verlagerungsmoment eingeleitet wird.

Vorliegend ist das Lenksystem 7 (der Vorderachse) als grundsätzlich bekannte Zahnstangenlenkung ausgebildet, d.h. es ist ein sich in Fahrzeug-Querrichtung erstreckendes Zahnstangen-Lenkgetriebe 7a vorgesehen, in das über einen Lenkspindel-Anschluss 7c über eine nicht dargestellte sog. Lenkspindel ein vom Fahrer des Fahrzeugs gewünschter Lenkwinkel einleitbar ist und in welches weiterhin über einen ebenfalls als Elektromotor ausgebildeten Motor 7b ein Unterstützungsmoment eingeleitet werden kann. Ein über die besagte Lenkspindel eingeleiteter Lenkwinkel und/oder ein über den Motor 7b eingeleitetes Unterstützungsmoment bewirkt bzw. bewirken, dass figürlich nicht dargestellte, beidseitig des Zahnstangen-Lenkgetriebes 7a an die Enden von dessen Zahnstange in bekannter Weise angelenkte Spurhebel oder Spurstangen, die mit ihrem anderen Ende letztlich mit dem bereits genannten Schwenklager des jeweiligen Rades verbunden sind, mit ihren Zahnstangen-Anlenkpunkten in Fahrzeug-Querrichtung verlagert werden. Die entsprechende sich in Fahrzeug-Querrichtung erstreckende sog. Verlagerungsachse 7d der Spurhebel oder Spurhebel-Anlenkpunkte an das Zahnstangen-Lenkgetriebe 7a ist bekanntlich durch die Längsrichtung der Zahnstange des Zahnstangen-Lenkgetriebes 7a definiert und es ist - wie ersichtlich - der Motor 7b des Lenksystems 7 seitlich von der Verlagerungsachse 7d und seitlich des Zahnstangen-Lenkgetriebes 7a angeordnet, wobei hier das Wort "seitlich" auch für den Begriff "seitlich neben" stehen kann. Zur Übertragung des Drehmoments vom Motor 7b in das Zahnstangen-Lenkgetriebe 7a ist ein geeignetes Zwischengetriebe 7e, bspw. in Form eines Zahnradgetriebes, vorgesehen.

Innerhalb des vom Achsträger 1 beschriebenen Rahmens, d.h. innerhalb des von den beiden Längsträgern 1a und den Querstreben 1b, 1 c begrenzten Raumes sowie im wesentlichen in der von diesem Achsträger 1 beschriebenen Ebene sind die beiden Motoren 5b, 7b, nämlich der Elektro-Motor 5b des Wankstabilisierungssystems 5 und der Elektro-Motor 7b des Lenksystems 7 derart in Fahrzeug-Querrichtung hintereinander liegend angeordnet, dass ihre Rotationsachsen im wesentlichen zusammenfallen, d.h. im wesentlichen auf einer sich in Fahrzeug-Querrichtung in einer parallel zur Fahrbahn liegenden Horizontalebene senkrecht zur Längsachse 2 des Fahrzeugs erstreckenden gemeinsamen Motor-Rotationsachse 8 liegen. Hiermit ergibt sich eine äußert kompakte, wenig Bauraum beanspruchende Anordnung.

Das Zahnstangen-Lenkgetriebe 7a trägt den zugehörigen Motor 7b und ist jeweils endseitig über eine Abstützstelle 9 am linken sowie am rechten vorderen Eckbereich des Vorder-Achsträgers 1 befestigt, wobei in der Figur nur eine dieser Abstützstellen 9 sichtbar ist, da sich die andere, bezüglich der Längsachse 2 spiegelsymmetrische Abstützstelle in dieser Ansicht hinter dem Motor 5b befindet. Über zwei im mittleren Bereich des Gehäuses des Zahnstangen-Lenkgetriebes 7a vorgesehene Abstützstellen 10 ist das Lenkgetriebe 7a zusammen mit dem zugehörigen Motor 7b über an der hinteren Querstrebe 1 c vorgesehene Anflanschaugen an dieser Querstrebe 1c abgestützt. Hiermit trägt das Lenksystem 7 zur Versteifung des Achsträgers 1 bei. In entsprechender Weise kann - was aus der beigefügten Figur nicht hervorgeht - der Motor 5b des Wankstabilisierungssystems 5 und/oder dessen Getriebe 5a einerseits zwischen einem Eckbereich des Achsträgers 1 und andererseits einer Querstrebe 1b oder 1 c des Achsträgers 1 abgestützt sein. Ebenfalls figürlich nicht dargestellt ist eine weitere mögliche Abstützung der beiden Motoren 5b und 7b bzw. dieser Motoren 5b, 7b und der zugehörigen Getriebe 5a, 7a und oder der jeweiligen Zwischengetriebe 5e, 7e gegeneinander, so dass das Lenksystem 5 (selbstverständlich mit Ausnahme der genannten Spurhebel) und das Wankstabilisierungssystem 7 (selbstverständlich mit Ausnahme des Querstabilisators 4) letztlich aneinander abgestützt sind und somit die Steifigkeit der gesamten Anordnung sowie des Achsträgers 1 erhöhen können, jedoch kann dies sowie eine Vielzahl weiterer Details insbesondere konstruktiver Art durchaus abweichend von obigen Erläuterungen gestaltet sein, ohne den Inhalt der Patentansprüche zu verlassen.

## Patentansprüche

1. Anordnung eines Wankstabilisierungssystems (5) mit geteiltem Querstabilisator (4) sowie eines Lenksystems (7) an einem zweispurigen Kraftfahrzeug, wobei ein Getriebe (5a) des Wankstabilisierungssystems (5) im wesentlichen koaxial zwischen den beiden gegeneinander verdrehbaren Hälften (4a, 4b) des Querstabilisators (4) und ein Motor (5b) zur Einleitung eines Stabilisierungsmomentes seitlich dieses Getriebes (5a) und Querstabilisators (4) angeordnet ist, und wobei das Lenksystem (7) neben einem Lenkgetriebe (7a), mit welchem letztlich auf die lenkbaren Fahrzeug-Räder einwirkende Spurhebel im wesentlichen in Fahrzeug-Querrichtung verlagerbar sind, einen seitlich des Lenkgetriebes (7a) und einer durch die verlagerbaren Spurhebel beschriebenen Verlagerungsachse (7d) angeordneten Motor (7b) zur Einleitung eines eine solche Verlagerung unterstützenden oder veranlassenden Moments aufweist,
**dadurch gekennzeichnet, dass** der Motor (5b) des Wankstabilisierungssystems (5) und der Motor (7b) des Lenksystems (7) in Fahrzeug-Querrichtung betrachtet im wesentlichen hintereinander liegen.

2. Anordnung nach Anspruch 1,
**dadurch gekennzeichnet, dass** der Motor (5b) des Wankstabilisierungssystems (5) und der Motor (7b) des Lenksystems (7) Elektromotoren mit in Fahrzeug-Querrichtung verlaufenden und im wesentlichen zusammenfallenden Rotationsachsen (8) sind.

3. Anordnung nach Anspruch 1 oder 2,
**dadurch gekennzeichnet, dass** der Motor (5b) des Wankstabilisierungssystems (5) und der Motor (7b) des Lenksystems (7) innerhalb eines Achsträgers (1) im wesentlichen in dessen Ebene liegend angeordnet sind.

4. Anordnung nach Anspruch 3,
**dadurch gekennzeichnet, dass** die Motoren (5b, 7b) oder eine durch einen der Motoren (5b, 7b) und das zugehörige Getriebe (5a, 7a) gebildete Motor-Getriebe-Einheit zwischen einem Eckpunkt des Achsträgers (1) und einer Querstrebe (1b, 1 c) des Achsträgers (1) jeweils entweder direkt oder indirekt abgestützt sind.

5. Anordnung nach einem der vorangegangenen Ansprüche,
**dadurch gekennzeichnet, dass** die Motoren (5b, 7b) oder durch einen der Motoren (5b, 7b) und das zugehörige Getriebe (5a, 7a) gebildete Motor-Getriebe-Einheiten in Fahrzeug-Querrichtung betrachtet gegeneinander abgestützt sind.

## Claims

1. An arrangement of a roll stabilisation system (5) with a divided lateral stabiliser (4) and of a steering system (7) on a double track motor vehicle, wherein a transmission (5a) of the roll stabilisation system (5) is arranged substantially coaxially between the two halves (4a, 4b) of the lateral stabiliser (4) that can be rotated with respect to one another, and a motor (5b) for introducing a stabilising torque is arranged to the side of this transmission (5a) and lateral stabiliser (4), and wherein the steering system (7), apart from a steering gear (7a), with which steering arms ultimately acting on the steerable vehicle wheels are displaceable substantially in the transverse direction of the vehicle, has a motor (7b), which is arranged to the side of the steering gear (7a) and a displacement axis (7d) described by the displaceable steering arms, to introduce a torque assisting a displacement of this type or causing it, **characterised in that** the motor (5b) of the roll stabilisation system (5) and the motor (7b) of the steering system (7) are located substantially one behind the other viewed in the transverse direction of the vehicle.

2. An arrangement according to claim 1, **characterised in that** the motor (5b) of the roll stabilisation system (5) and the motor (7b) of the steering system (7) are electric motors with rotational axes (8) running in the transverse direction of the vehicle and substantially coinciding.

3. An arrangement according to claim 1 or 2, **characterised in that** the motor (5b) of the roll stabilisation system (5) and the motor (7b) of the steering system (7) are arranged within an axle carrier (1), located substantially in the plane thereof.

4. An arrangement according to claim 3, **characterised in that** the motors (5b, 7b) or a motor/transmission unit formed by one of the motors (5b, 7b) and the associated transmission (5a, 7a) are supported either directly or indirectly, in each case, between a corner point of the axle carrier (1) and a cross member (1b, 1 c) of the axle carrier (1).

5. An arrangement according to any one of the preceding claims, **characterised in that** the motors (5b, 7b) or motor/transmission units formed by one of the motors (5b, 7b) and the associated transmission (5a, 7a) are supported against one another, viewed in the transverse direction of the vehicle.

## Revendications

1. Arrangement d'un système de stabilisation de anti roulis (5) équipé d'un stabilisateur transversal segmenté (4) et d'un système de direction (7) sur un véhicule à deux voies, dans lequel une transmission (5a) du système de stabilisation anti roulis (5) est monté essentiellement coaxialement entre les deux moitiés (4a, 4b) mobiles en rotation l'une par rapport à l'autre du stabilisateur transversal (4) et un moteur (5b) permettant l'application d'un couple de stabilisation est monté latéralement à cette transmission (5a) et ce stabilisateur transversal (4), et, le système de direction (7) comporte, outre une transmission de direction (7a) par laquelle des leviers de voie agissant finalement sur les roues directrice du véhicule peuvent être déplacées essentiellement dans la direction transversale du véhicule, un moteur (7b) monté transversalement à la transmission de direction (7a) et à un axe de déplacement (7d) décrit par les leviers de voie déplaçables pour appliquer un couple supplémentaire, assistant ou provoquant un tel déplacement,
**caractérisé en ce que**
le moteur (5b) du système de stabilisation anti roulis (5) et le moteur (7b) du système de direction (7) sont situés essentiellement l'un derrière l'autre dans la direction transversale du véhicule.

2. Arrangement conforme à la revendication 1,
**caractérisé en ce que**
le moteur (5b) du système de stabilisation anti roulis (5) et le moteur (7b) du système de direction (7) sont des moteurs électriques avec des axes de rotation (8) dirigés dans la direction transversale du véhicule et coïncidant essentiellement l'un avec l'autre.

3. Arrangement conforme à la revendication 1 ou 2,
**caractérisé en ce que**
le moteur (5b) du système de stabilisation anti roulis (5) et le moteur (7b) du système de direction (7) sont situés à la partie interne d'un support d'essieu (1) essentiellement dans le plan de celui-ci.

4. Arrangement conforme à la revendication 3,
**caractérisé en ce que**
les moteurs (5b, 7b) ou une unité moteur-transmission formée par l'un des moteurs (5b, 7b) et la transmission (5a, 7a) associée s'appuient soit directement soit indirectement respectivement entre un coin du support d'essieu (1) et une entretoise transversale (1b, 1c) de ce support d'essieu (1).

5. Arrangement conforme à l'une des revendications précédentes,
**caractérisé en ce que**
le moteurs (5b, 7b) ou des unités moteur-transmission formées par l'un des moteurs (5b, 7b) et la transmission (5a, 7a) associée s'appuient l'un contre l'autre dans la direction transversale du véhicule.
